# FASCICULE DE BREVET EUROPEEN

(11) **EP 4 482 287 B1**
(45) Date de publication et mention de la délivrance du brevet: **20.05.2026**
(21) Numéro de dépôt: 22814374.9
(22) Date de dépôt: 09.11.2022
(51) Int. Cl.: A01B 51/02, A01G 25/09, A01B 69/04

(54) **SYSTEME DE PORTIQUE ROBOTISE AGRICOLE COMPORTANT UN PORTE-OUTIL ADAPTABLE A PLUSIEURS OUTILS**
LANDWIRTSCHAFTLICHES ROBOTISCHES PORTALSYSTEM MIT EINEM AN MEHRERE WERKZEUGE ANPASSBAREN WERKZEUGTRÄGER
AGRICULTURAL ROBOTIC GANTRY SYSTEM HAVING A TOOL CARRIER ADAPTABLE TO A PLURALITY OF TOOLS

(30) Priorité: 15.11.2021 FR 2112079
(43) Date de publication de la demande: 01.01.2025
(73) Titulaire: Sylvabot, 78860 Saint-Nom-la-Bretèche (FR)
(72) Inventeur: REY, Alexia, 78100 Saint-Germain-en-Laye (FR); LE BLAINVAUX, Olivier, 78150 Le Chesnay (FR); ACOSTA, Norman, 78200 Mantes-la-Jolie (FR); BALEYNAUD, Nicolas, 78000 Versailles (FR); CHIEUX, Romuald, 78460 Chevreuse (FR); ARGUEDAS, Mikaël, 92140 Clamart (FR)
(74) Mandataire: Gabriel, Franck
(86) Numéro de dépôt international: PCT/EP2022/081224
(87) Numéro de publication internationale: WO 2023/083845

(56) Documents cités:
- CN-A- 112 753 436
- US-A1- 2019 274 241
- US-B1- 10 920 434

## Description

### Domaine technique

L'invention concerne le domaine technique des systèmes de portique robotisé agricole. L'invention vise en particulier à fournir un porte-outil de portique robotisé de ferme maraîchère qui s'adapte à plusieurs outils agricoles.

### Technique antérieure

Le brevet US 9,622,398 décrit un portique robotisé comportant une passerelle qui est mis en mouvement par des moyens de propulsion le long d'une pluralité de rangées de culture, plusieurs outils agricoles couplés à la passerelle, un système d'alimentation électrique des moyens de propulsion, un contrôleur qui supervise le fonctionnement des moyens de propulsion et des outils agricoles, le contrôleur activant un outil agricole en réponse à la détection de conditions environnementales prédéterminées. Le brevet décrit également une méthode et un système informatique pour contrôler le fonctionnement du portique robotisé.

La demande de brevet AT 364659 décrit un portique robotisé comprenant un pont mobile se déplaçant dans le sens longitudinal au moyen de châssis à roues circulant sur des rails, un chariot mobile se déplaçant dans le sens transversalement et conçu comme porte-équipement (équipement pour les semis ou planter les graines ou pour le désherbage des mauvaises herbes). Le porte-équipement comporte un support mobile dans la direction verticale. Une commande automatique, mise en œuvre par ordinateur, contrôle le déplacement du pont et du chariot, ainsi que l'actionnement des équipements pour la plantation des plantes ou le semis des graines et des équipements pour le désherbage. US 2019/274241 A1, US 10 920 434 B1 et CN 112 753436 A montrent d'autres systèmes de portique robotisé agricole connus.

Divers inconvénients résultent de tels portiques robotisés, notamment en ce qui concerne le changement de l'outil agricole en cours d'utilisation par un autre outil agricole, et l'efficacité de mise en œuvre du programme de culture qui nécessite un outil agricole spécifique pour chaque type d'intervention envisagée (préparation du sol, semis, plantation, désherbage, lutte contre les indésirables, etc.). D'une part, certains portiques robotisés de l'art antérieur nécessitent que chaque portique robotisé comporte tous les outils, l'outil ad hoc étant activé en fonction du programme de culture, ce qui rend le porte- outil complexe, lourd, etc. D'autre part, certains portiques robotisés de l'art antérieur nécessitent que l'outil soit changé manuellement.

Il existe donc un besoin d'offrir un système de portique robotisé qui rende le changement d'outil plus facile à mettre en œuvre, par exemple en réduisant, voire en évitant les inconvénients précités.

### Résumé de l'invention

C'est un objet de l'invention que de proposer un porte-outil de portique robotisé de ferme maraîchère qui surmonte un ou plusieurs des inconvénients ou limitations des techniques de portiques robotisés existants.

Selon un aspect, il est proposé un système de portique robotisé agricole comprenant au moins un chariot motorisé muni d'un porte-outil pour mettre en œuvre un outil relativement à une surface de culture, le porte-outil comportant une platine de couplage au chariot et un corps de porte-outil, l'outil comportant une platine de l'outil lié à un élément fonctionnel de l'outil, le système de portique robotisé agricole est caractérisé en ce que le corps de porte-outil et la platine de l'outil sont agencés pour coupler de manière amovible l'outil au porte-outil et en ce que :
- le corps de porte-outil comporte un logement de corps formant une cavité débouchante vers la platine de l'outil, un coulisseau de verrouillage positionné dans le logement de corps et s'étendant dans celui-ci de sorte à être reçu de manière coulissante en translation par au moins un alésage du logement de corps, le coulisseau de verrouillage comportant une partie centrale et au moins une partie latérale, ladite partie centrale étant dimensionnée selon une première section de dimension inférieure à une seconde section de ladite partie latérale, et un sélecteur de configuration du coulisseau apte à translater le coulisseau de verrouillage dans le logement de corps et dans le, au moins un, alésage ;
- la platine de l'outil comporte une interface de verrouillage munie d'une rainure définissant au moins une paroi s'étendant perpendiculairement à ladite platine de l'outil et d'un alésage de l'interface de verrouillage positionné et dimensionné de sorte qu'une ouverture ménagée en partie supérieure de ladite paroi permet uniquement un passage de la partie centrale et une ouverture ménagée en partie centrale de ladite paroi permet une translation de la partie latérale pour former une glissière linéaire ouverte pour ledit coulisseau ;
- ladite interface de verrouillage coopérant avec ledit coulisseau de verrouillage sous l'action dudit sélecteur de configuration du coulisseau entre une configuration déverrouillée et une configuration verrouillée de l'outil avec le porte-outil.

Le logement de corps peut comporter deux alésages en vis-à-vis, le coulisseau de verrouillage comportant une partie centrale et deux parties latérales, l'interface de verrouillage comportant deux parois s'étendant perpendiculairement à ladite platine de l'outil chacune traversée par l'alésage de l'interface de verrouillage, le coulisseau de verrouillage étant reçu de manière coulissante en translation dans les deux alésages du logement de corps et dans l'alésage de l'interface de verrouillage.

Le sélecteur de configuration du coulisseau peut être réalisé au moyen d'un moteur de sélecteur et d'une vis sans fin.

Le corps de porte-outil peut comporter plusieurs trous de positionnement du porte-outil vis-à-vis de l'outil.

Le porte-outil peut comporter un capteur d'identification et l'outil peut comporter une étiquette d'identification.

Le porte-outil peut comporter un connecteur électrique et données pour alimenter et/ ou échanger des données ou des commandes entre le porte-outil et l'outil.

Le système peut comporter, en outre, un support d'outil comportant au moins une platine de support pour supporter l'outil fixée à une structure portante et reposant contre une partie sensiblement verticale de la structure portante au moyen d'au moins une équerre de positionnement et d'au moins un moyen de réglage pour régler l'horizontalité de la platine de support.

Le moyen de réglage pour régler l'horizontalité de la platine de support peut comporter un excentrique de réglage ou une vis de réglage.

Le porte-outil peut comprendre un ensemble de capteurs de positionnement du porte-outil réalisé sous la forme d'un ensemble de capteur de positionnement du porte-outil comportant un premier capteur de position du porte-outil selon la direction longitudinale, un deuxième capteur de position du porte-outil selon la direction transversale et un troisième capteur de position du porte-outil selon la direction verticale, chaque capteur étant réalisé sous la forme d'un capteur mécanique de position linéaire. Le support d'outil peut comporter un trièdre de positionnement du porte-outil relativement à l'outil sur le support d'outil, ledit trièdre de positionnement comportant une première partie verticale pour un positionnement longitudinal, une seconde partie verticale pour un positionnement transversal et une partie horizontale pour un positionnement en hauteur coopérant respectivement avec lesdits premier, deuxième et troisième capteurs de position du porte-outil. Alternativement, le porte-outil peut comprendre un moyen de positionnement du porte-outil réalisé sous la forme d'au moins un capteur optique de positionnement du porte-outil, le support d'outil comportant au moins une cible de positionnement.

La platine de l'outil peut comporter au moins un trou de positionnement de l'outil, chaque trou de positionnement de l'outil coopérant avec un cône de positionnement du support pour positionner l'outil sur le support d'outil.

L'invention est particulièrement applicable pour des portiques robotisés assurant des interventions variées sur la zone de culture afin d'améliorer l'aptitude à changer d'outil. Le système de portique robotisé selon l'invention possède en outre les avantages suivants :
- Il ne comporte pas de roue ou de chenillette se mouvant directement sur le sol, ou d'installation de rail au sol, permettant en cela de gérer de manière satisfaisante les problématiques de tassement du sol ;
- Le système ne nécessite pas de mettre en place des infrastructures complexes ;
- Le système est structurellement léger, compact et simple d'installation, il est donc particulièrement adapté à des serres de fermes maraîchères, une serre pouvant comporter une ou plusieurs chapelles ;
- Le système permet un changement automatisé des outils, résultant dans un robot agricole multitâche et un gain de productivité ;
- L'interface de verrouillage de l'outil est commune à chaque outil et adapté au porte-outil de sorte que le porte-outil s'adapte de manière universelle à tout type d'outil ; et
- Le système permet une automatisation des tâches maraîchères les plus longues, pénibles et répétitives afin de concentrer le travail des maraîchers sur des tâches à plus forte valeur ajoutée.

D'autres avantages ressortiront de la description ci-après de l'invention.

### Brève description des dessins

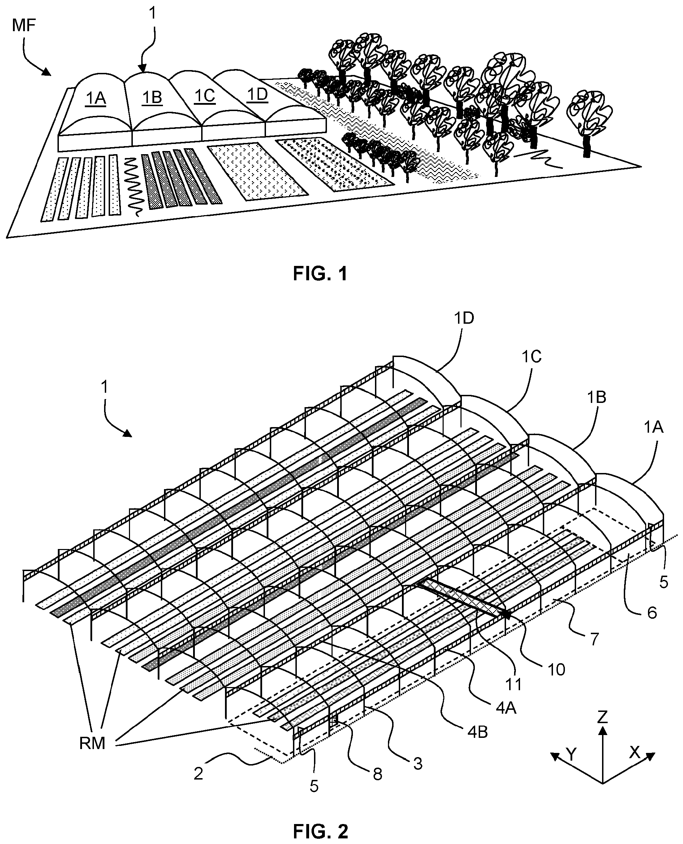

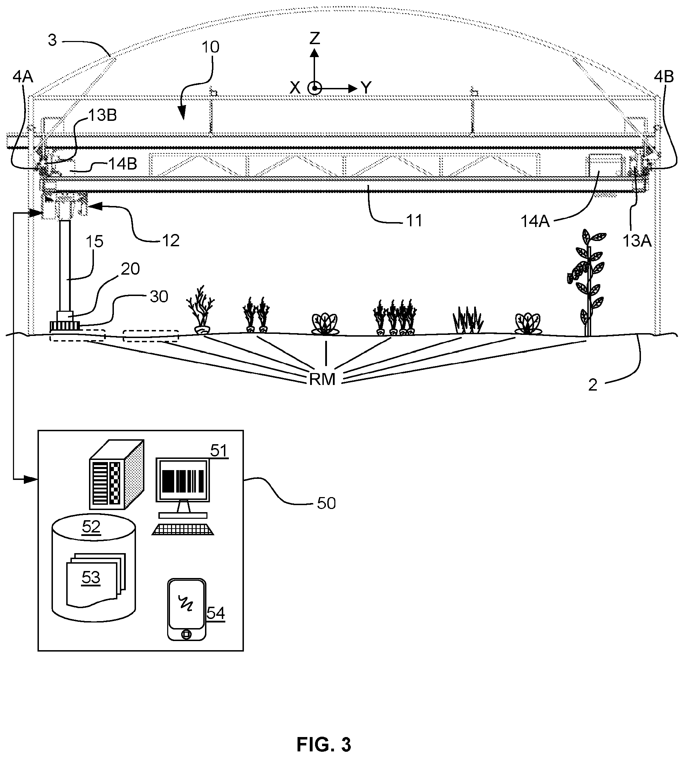

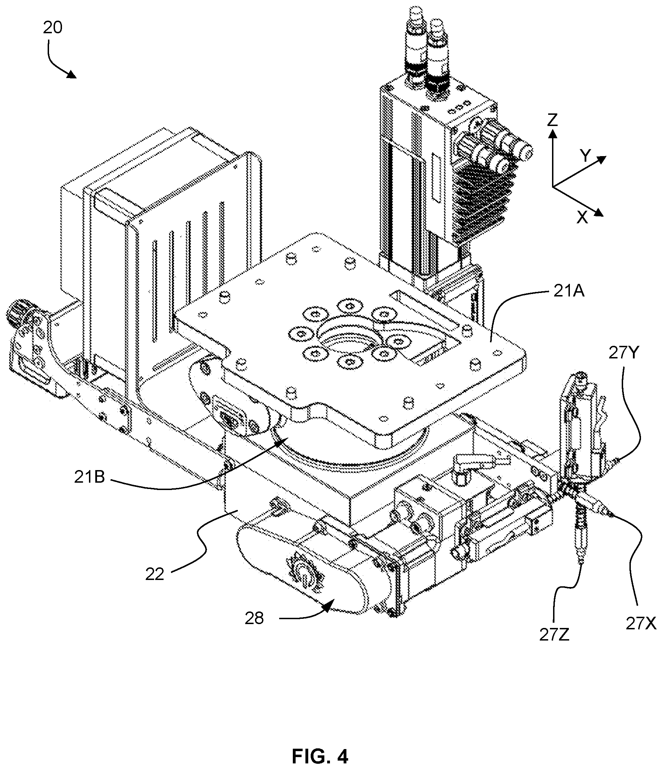

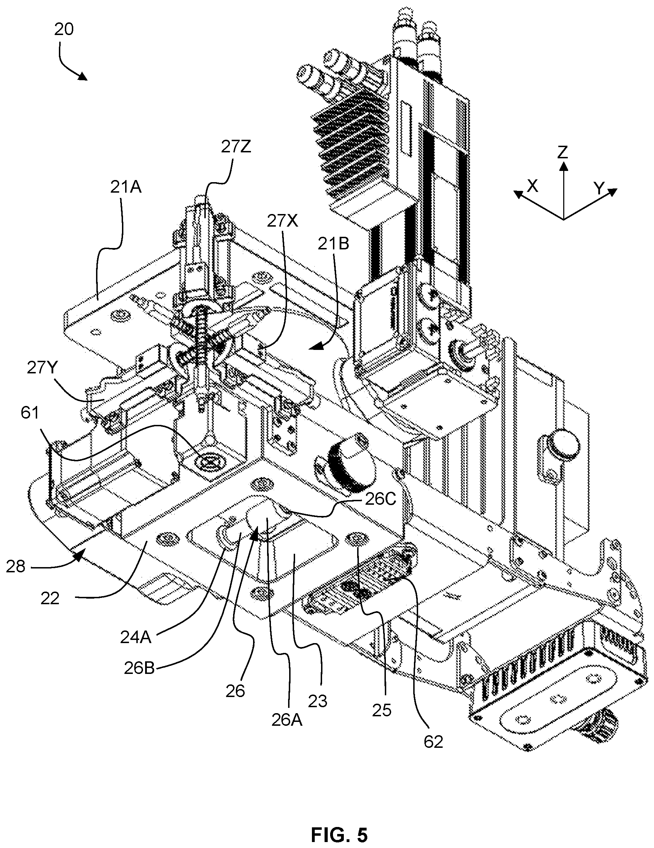

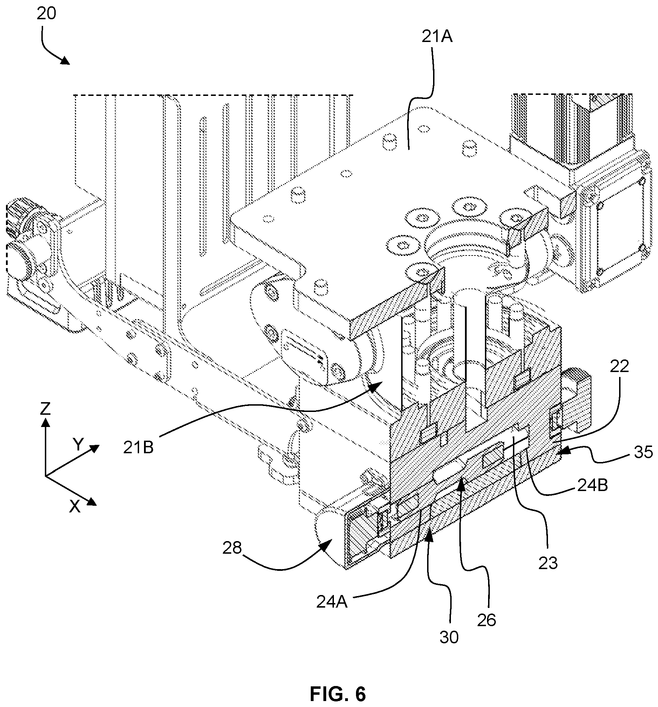

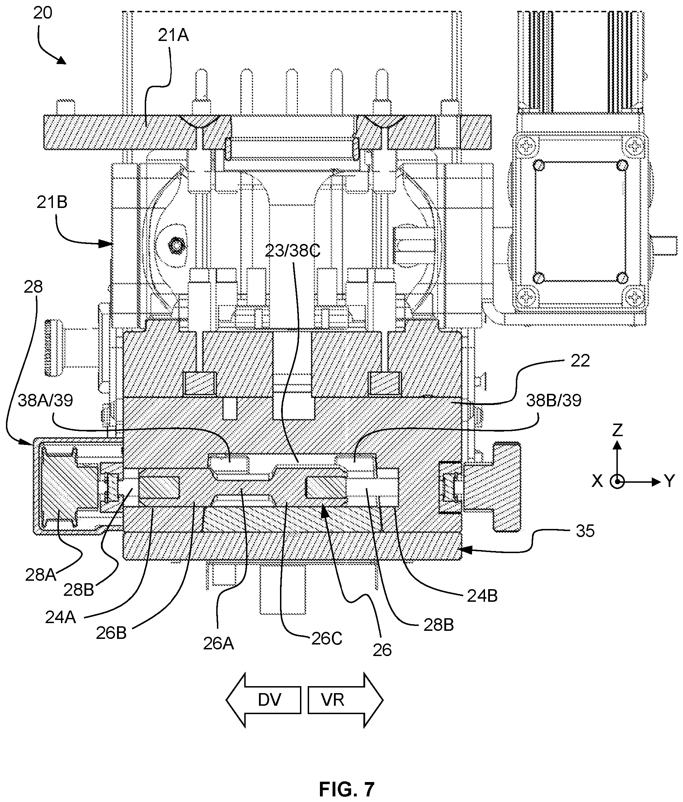

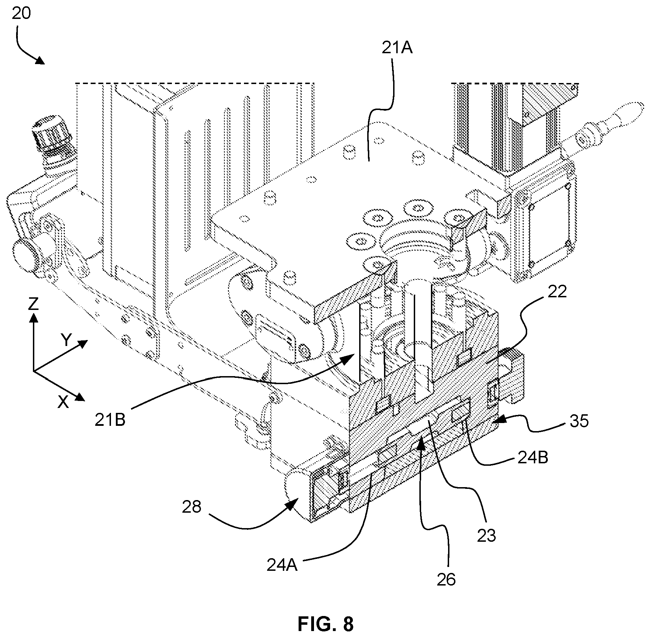

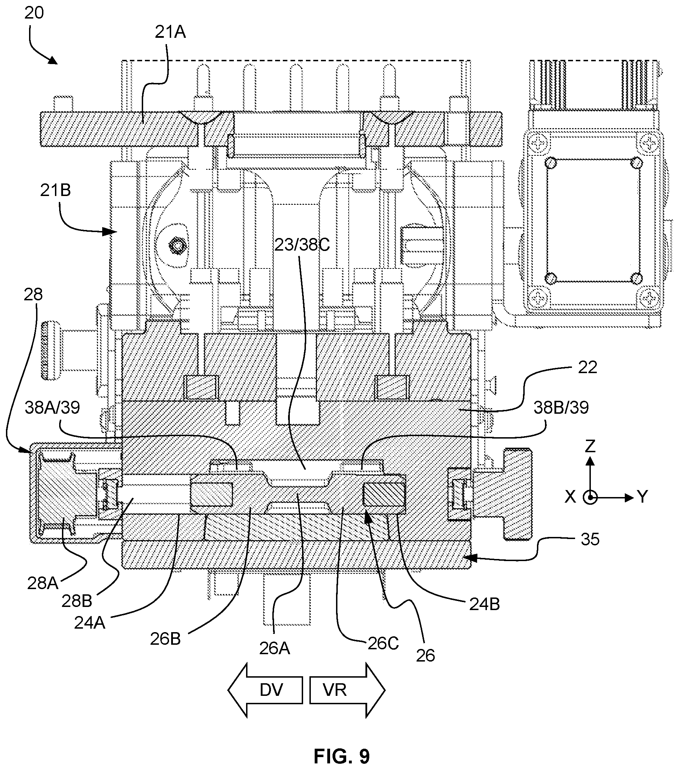

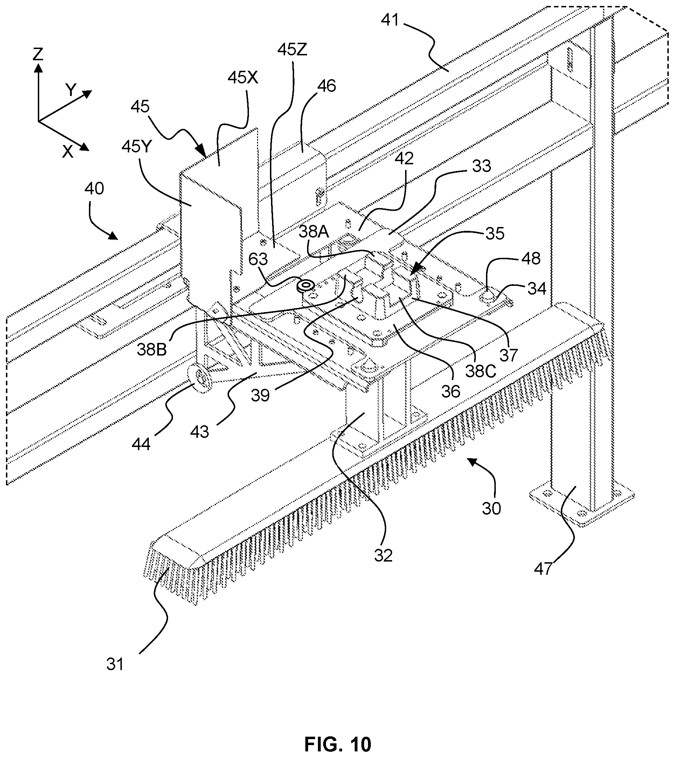

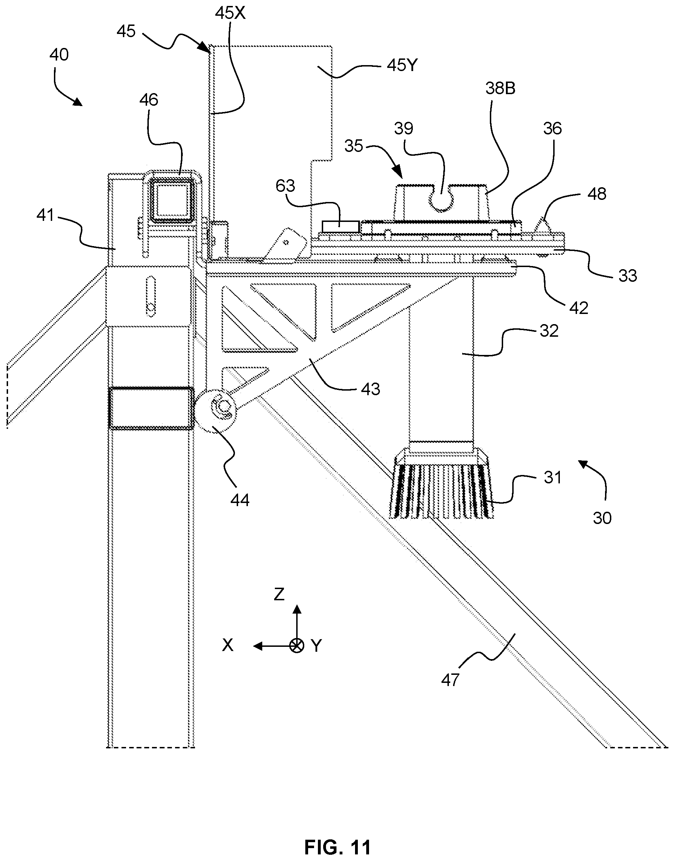

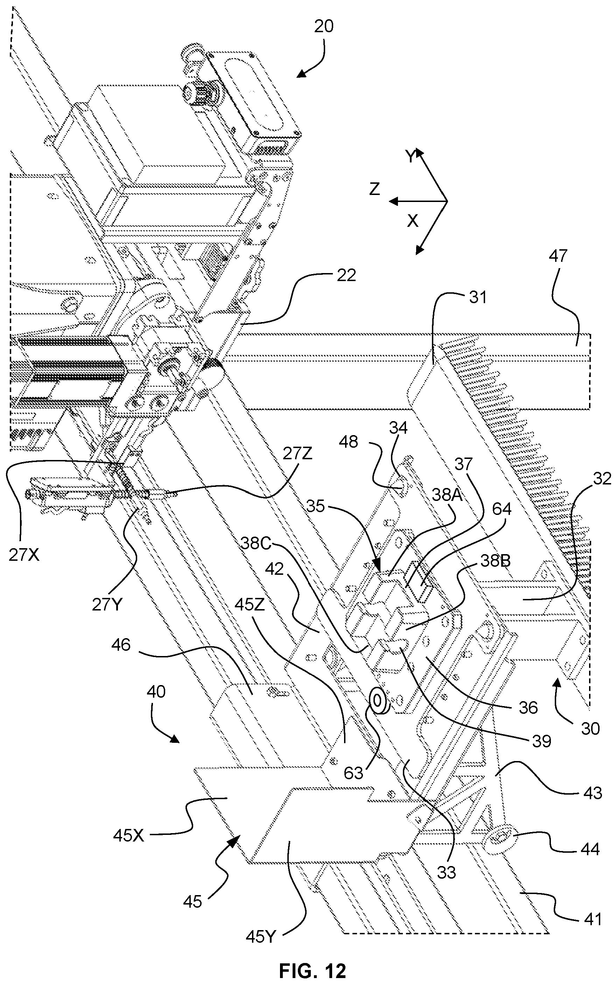

La présente invention est illustrée par des exemples et non limitée aux dessins annexés, dans lesquels des références similaires indiquent des éléments similaires :
La Figure [Fig.1] est une vue en perspective représentant schématiquement une micro-ferme maraîchère comportant une serre comprenant plusieurs chapelles ;
La Figure [Fig.2] est une vue schématique en perspective de dessus et semi-transparente illustrant une serre comprenant plusieurs chapelles, munie d'un portique robotisé selon un mode de réalisation de l'invention ;
La Figure [Fig.3] est une vue de face d'une chapelle représentée à la [Fig.2] illustrant schématiquement le système de portique robotisé selon un mode de réalisation de l'invention ;
Les Figures [Fig.4] et [Fig.5] sont des vues schématiques en perspective, respectivement de dessus et de dessous, du porte-outil du portique robotisé selon un mode de réalisation de l'invention ;
Les Figures [Fig.6] et [Fig.7] sont des vues schématiques en coupe, respectivement en perspective de dessus et de face, du porte-outil du portique robotisé selon un mode de réalisation de l'invention montrant le coulisseau de verrouillage dans une configuration déverrouillée ;
Les Figures [Fig.8] et [Fig.9] sont des vues schématiques en coupe, respectivement en perspective de dessus et de face, du porte-outil du portique robotisé selon un mode de réalisation de l'invention montrant le coulisseau de verrouillage dans une configuration verrouillée ;
Les Figures [Fig.10] et [Fig.11] sont des vues schématiques, respectivement en perspective de dessus et de côté, du support d'outil du portique robotisé selon un mode de réalisation de l'invention, un outil reposant sur ledit support d'outil ; et
La Figure [Fig.12] est une vue en perspective illustrant schématiquement un porte-outil en approche du support d'outil sur lequel repose un outil lors du fonctionnement du portique robotisé selon un mode de réalisation de l'invention.

### Description détaillée

L'invention sera comprise à partir de la description suivante, dans laquelle il est fait référence aux dessins annexés.

### Portique robotisé dans la serre:

La Figure [Fig.1] montre schématiquement une micro-ferme maraîchère MF selon une vue en perspective. La micro-ferme maraîchère MF comporte par exemple au moins une serre 1 comprenant plusieurs chapelles par exemple quatre chapelles adjacentes 1A, 1B, 1C et 1D.

La Figure [Fig.2] montre schématiquement une serre 1 comprenant quatre chapelles adjacentes 1A, 1B, 1C et 1D selon une vue en perspective de dessus et semi-transparente. La Figure [Fig.3] est une vue de face d'une première chapelle 1A représentée à la [Fig.2] montrant schématiquement le système de portique robotisé 10. La première chapelle 1A est réalisée par une succession d'arches 3 alignées selon une direction longitudinale X, chaque arche étant ancrée de manière appropriée dans le sol 2. Une surface de culture, c'est-à-dire des rangs de cultures maraîchères RM s'étendent sur le sol 2 sous la première chapelle 1A selon la direction longitudinale X dans une zone de culture 7. Également, une zone de stockage des outils 6 est prévue sur le sol 2 sous la première chapelle 1A. Bien que la Figure [Fig.2] montre cette zone de stockage des outils 6 à l'extrémité de la première chapelle 1A, elle pourrait aussi être positionnée ailleurs dans la première chapelle 1A, par exemple au milieu de la zone de culture 7, ou ailleurs dans la serre 1, ou ailleurs à l'extérieur de la serre 1. La première chapelle 1A est munie d'un système de portique robotisé 10. Des rails 4A et 4B sensiblement horizontaux et en vis-à-vis sont fixés sur chacun des deux montants verticaux des arches 3 à une hauteur appropriée. Un premier chariot 11 peut se déplacer le long des rails 4A, 4B selon la direction longitudinale X. Le déplacement selon la direction longitudinale X est réalisé par un ensemble motorisé 13A alimenté et contrôlé par un premier boîtier électrique 14A. Le premier chariot 11 assure le support et le guidage latéral selon la direction transversale Y d'un second chariot 12. Le second chariot 12 est muni d'un porte-outil 20 pour mettre en œuvre un outil 30 relativement à la surface de culture, par exemple des rangs de cultures maraîchères RM. L'outil 30 de culture peut être un outil agricole du type passif (i.e. essentiellement mécanique) ou du type actif (i.e. pouvant comporter un moteur et/ou des actionneurs et/ou des capteurs). A titre d'exemples non limitatifs, l'outil 30 peut être un outil d'aplanissage, un rouleau-plombeur, un râteau, un motoculteur, un semoir, un outil de désherbage herse étrille ou préci-disque, une repiqueuse à plants, un décompacteur, un épandeur, un socle de labourage, un plantoir, un dispositif de traitement des indésirables, etc... Le second chariot 12 comporte également une colonne 15 pour réaliser le déplacement de l'outil 30 selon la direction verticale Z. Les déplacements selon les directions transversale Y et verticale Z sont assurés par un second ensemble motorisé 13B alimenté et contrôlé par un second boîtier électrique 14B. Des butées 5 peuvent être prévues, par exemple au niveau d'un ou de deux rails 4A, 4B pour éviter le déplacement du portique robotisé 10 au-delà d'une position extrême prédéfinie. Un système informatique 50 contrôle le fonctionnement du portique robotisé 10, c'est-à-dire le déplacement des chariots 11, 12, le choix de l'outil 30 adapté à l'intervention agricole envisagée et l'actionnement de l'outil 30. Plus précisément, le système informatique 50 comporte un ordinateur 51 muni d'une mémoire 52 dans laquelle est stocké un logiciel 53 de gestion de l'activité maraîchère, de planification et du suivi quotidien de l'activité de l'exploitation de la micro-ferme maraîchère MF. Le système informatique 50 peut aussi interagir avec un dispositif mobile de type tablette informatique ou mobile multifonction/smartphone 54. Le système informatique 50 peut aussi recevoir des données variées (météorologie, température, humidité de l'air, humidité du sol, ensoleillement, état du sol, état des plantes, etc.) de la part de capteurs 8 disposés dans et en -dehors de la serre 1. Ces données peuvent être prises en compte par le logiciel 53.

Les autres chapelles 1B, 1C et 1D peuvent être conçues de manière similaire à la première chapelle 1A. D'autres serres analogues à la première serre 1 peuvent également faire partie de la micro-ferme maraîchère MF.

### Porte-outil:

Les Figures [Fig.4] et [Fig.5] montrent schématiquement en perspective de dessus et en perspective de dessous, un porte-outil 20 du portique robotisé 10.

Le porte-outil 20 comporte principalement une platine de couplage 21A en partie supérieure, un corps de porte-outil 22 en partie inférieure et un ensemble de capteurs de positionnement du porte-outil 27X, 27Y, 27Z.

La platine de couplage 21A permet de coupler le porte-outil 20 à la colonne 15 du second chariot 12. Un couplage approprié est réalisé par des ergots de positionnement et des alésages permettant un boulonnage à la colonne (ces éléments et ce couplage ne sont pas montrés en détail sur les figures).

Le corps de porte-outil 22 permet de coupler de manière amovible l'outil 30 au porte-outil 20. Pour ce faire, le corps de porte-outil 22 comporte un logement de corps 23 formant une cavité débouchant en partie inférieure du porte-outil 20. Le logement de corps 23 comporte deux alésages 24A, 24B en vis-à-vis. Un coulisseau de verrouillage 26 est positionné dans le logement de corps 23 et s'étend dans celui-ci de sorte à être reçu de manière coulissante en translation dans les deux alésages 24A, 24B. Le coulisseau de verrouillage 26 comporte une partie centrale 26A et deux parties latérales 26B, 26C. La partie centrale 26A est dimensionnée selon une première section de dimension inférieure à la seconde section des deux parties latérales 26B, 26C. Les deux parties latérales 26B, 26C peuvent présenter un chanfrein dans la zone de transition avec la partie centrale 26A. Dans l'exemple présenté, les alésages 24A, 24B et le coulisseau de verrouillage 26 s'étendent et fonctionnent selon l'axe transversal Y. Un sélecteur de configuration du coulisseau 28 est couplé au corps de porte-outil 22, par exemple latéralement. Le sélecteur de configuration du coulisseau 28 permet de positionner le coulisseau de verrouillage 26 soit dans une configuration déverrouillée, soit dans une configuration verrouillée en déplaçant le coulisseau de verrouillage 26 dans le logement de corps 23 et dans les deux alésages 24A, 24B. Le sélecteur de configuration du coulisseau 28 peut par exemple être réalisé au moyen d'un moteur de sélecteur 28A et d'une vis sans fin 28B (voir la Figure [Fig.9]). Le fonctionnement du coulisseau de verrouillage 26 en relation avec l'outil 30 sera expliqué plus en détail par la suite.

Le corps de porte-outil 22 peut comporter plusieurs trous de positionnement 25. Les trous de positionnement 25 peuvent être munis d'une fraisure. Ces trous de positionnement 25 peuvent servir à fixer le corps du porte-outil 22 à la partie supérieure (platine de couplage 21A et/ou couronnes motorisées 21B). Ils peuvent aussi servir à faciliter le bon positionnement du porte-outil 20 vis-à-vis de l'outil 30.

L'ensemble de capteurs de positionnement du porte-outil comporte un premier capteur de position du porte-outil selon la direction longitudinale 27X, un deuxième capteur de position du porte-outil selon la direction transversale 27Y, et un troisième capteur de position du porte-outil selon la direction verticale 27Z. Chacun de ses capteurs peut être réalisé sous la forme d'un capteur mécanique de position linéaire, par exemple un capteur de déplacement potentiométrique comportant un doigt de capteur avec un ressort de rappel et un corps de mesure avec sa connectique.

Le porte-outil 20 peut aussi comporter un capteur d'identification 61, par exemple un capteur RFID (de l'anglais « radio frequency identification ») pour lire l'identité associée à un outil et identifier l'outil 30 dans la zone de stockage des outils 6.

Le porte-outil 20 peut aussi comporter un connecteur électrique et données 62 pour alimenter et/ou échanger des données ou des commandes le cas échéant avec un outil adapté (i.e. un outil actif comportant des moteurs et/ou des actionneurs et/ou des capteurs intégrés). Dans ce cas, l'outil est muni d'un connecteur électrique et données de l'outil 64 (visible en pointillé sur la Figure [Fig.12] à titre uniquement d'illustration de sa position, l'outil représenté étant passif).

Le porte-outil 20 peut aussi comporter un ensemble de couronnes motorisées 21B disposé entre la platine de couplage 21A et le corps de porte-outil 22. Cet ensemble, lequel ne sera pas décrit plus en détail ici, a pour fonction d'autoriser une rotation dans le plan horizontal (définit par les axes X et Y) permettant ainsi de faire pivoter l'outil 30 en cas de besoin rendu éventuellement nécessaire par l'outil utilisé (par exemple pour positionner correctement une lame de socle relativement au rang maraîcher, pour tourner l'outil dans le bon sens à l'extrémité d'un rang avant de débuter un nouveau rang, etc.).

Les Figures [Fig.6] et [Fig.7] montrent schématiquement en coupe, en perspective de dessus et de face, un porte-outil 20 du portique robotisé 10 illustrant le coulisseau de verrouillage 26 se trouvant dans une configuration déverrouillée. Dans cette configuration déverrouillée, la première partie latérale 26B du coulisseau de verrouillage 26 s'est déplacée presque complètement dans le premier alésage 24A sous l'action du moteur 28A et de la vis sans fin 28B du sélecteur de configuration du coulisseau 28. La partie centrale 26A amincie du coulisseau de verrouillage 26 se trouve alors dans une position latérale en bord du logement de corps 23 à proximité du premier alésage 24A, laissant la seconde partie latérale 26C du coulisseau de verrouillage 26 sensiblement au centre du logement de corps 23.

Les Figures [Fig.8] et [Fig.9] montrent schématiquement en coupe, en perspective de dessus et de face, un porte-outil 20 du portique robotisé 10 illustrant le coulisseau de verrouillage 26 se trouvant dans une configuration verrouillée. Dans cette configuration verrouillée, suite à l'action du moteur 28A et de la vis sans fin 28B du sélecteur de configuration du coulisseau 28, la partie centrale 26A amincie du coulisseau de verrouillage 26 se trouve dans une position centrée dans le logement de corps 23, et les première et seconde parties latérales 26B, 26C du coulisseau de verrouillage 26 sont dans le logement de corps 23 dans une position à proximité des alésages respectifs 24A, 24B et partiellement reçues par leurs extrémités dans les alésages respectifs. La partie centrale 26A du coulisseau de verrouillage 26 se trouve donc sensiblement au centre du logement de corps 23, et les parties latérales 26B, 26C en bord du logement de corps 23.

### Outil sur support d'outil:

Les Figures [Fig.10] et [Fig.11] montrent schématiquement en perspective de dessus et de côté, un support d'outil 40 du portique robotisé et un outil 30 reposant sur le support d'outil 40.

L'outil 30 comporte un élément fonctionnel de l'outil 31, une platine de l'outil 33 et un profilé de liaison 32 de l'élément fonctionnel de l'outil à la platine de l'outil. L'élément fonctionnel de l'outil 31 disposé en partie basse est destiné à être en contact avec le sol, le rang maraîcher ou les plantes. La platine de l'outil 33 disposée en partie haute est destinée à être posée sur le support d'outil 40 et joue le rôle d'interface avec le porte-outil 20 pour accoupler ou désaccoupler l'outil 30 au porte-outil 20 du système de portique robotisé 10 en fonction de l'action maraîchère envisagée. L'outil 30 représenté sur les figures est un outil du type passif, une sorte de balai servant à aplanir un sol déjà travaillé par exemple avant un semis. Bien entendu, cet exemple est non limitatif et hormis l'élément fonctionnel de l'outil 31, les autres parties constitutives de l'outil 30, quelle qu'en soit sa fonction, sont analogues.

La platine de l'outil 33 comporte des trous de positionnement de l'outil 34, par exemple deux trous de positionnement 34. Les trous de positionnement 34 coopèrent avec des cônes de positionnement du support 48 pour positionner correctement l'outil 30 sur le support d'outil 40. La platine de l'outil 33 peut avoir une forme générale en H.

Une interface de verrouillage 35 est fixée sur la platine de l'outil 33 et forme une glissière linéaire ouverte pour le coulisseau 28. L'interface de verrouillage 35 comporte une embase 36 sur laquelle se trouve une pièce sensiblement parallélépipédique rainurée et percée comportant une semelle 37, une rainure 38C définissant de part et d'autre une première paroi 38A et une seconde paroi 38B, et un alésage 39. La semelle 37 est une surface plane d'appui s'étendant parallèlement à l'embase 36. La rainure 38C est sensiblement centrée et s'étend selon la direction longitudinale. La première paroi 38A et la seconde paroi 38B sont en vis-à-vis et s'étendent perpendiculairement à la semelle 37, sensiblement selon la direction verticale. La rainure 38C, les première et seconde parois 38A, 38B définissent une entaille longue dimensionnée pour recevoir l'une ou l'autre partie du coulisseau de verrouillage 26. L'ensemble des première et seconde parois 38A, 38B et une partie supérieure de la semelle 37 sont traversées de part en part par l'alésage 39. L'alésage 39 débouche dans la partie supérieure des première et seconde parois 38A, 38B de sorte que, d'une part, l'ouverture ménagée en partie supérieure est dimensionnée pour permettre uniquement le passage de la partie centrale 26A amincie du coulisseau de verrouillage 26, et, d'autre part, l'ouverture ménagée en partie centrale des première et seconde parois 38A, 38B et partiellement en partie supérieure de la semelle 37 est dimensionnée pour permettre la translation de la partie centrale 26A et des parties latérales 26B et 26C du coulisseau de verrouillage 26.

L'outil 30, par exemple la platine de l'outil 33 peut aussi comporter une étiquette d'identification 63, par exemple une radio-étiquette de l'outil RFID afin d'identifier l'élément fonctionnel de l'outil 31 associé à l'outil 30 se trouvant sur le support d'outil 40.

Le support d'outil 40 comporte une structure portante 41 qui peut comporter plusieurs poteaux de maintien 47 verticaux ou inclinés. Le support d'outil 40 comporte une platine de support 42 par outil 30. Même si les figures montrent une seule platine 42 et un seul outil, la structure portante 41 qui se trouve dans la zone de stockage des outils 6 peut comporter une multitude d'outils pour former un rack à outils. La platine de support 42 peut être fixée à la structure portante 41 par un profilé de positionnement latéral 46 du support d'outil 40 sur la structure portante 41 permettant un positionnement approprié en fonction de la dimension de l'outil 30 en particulier lorsque plusieurs outils 30 sont stockés sur le support d'outil 40.

La platine de support 42 est positionnée à l'horizontal. Ceci peut être réalisé au moyen d'au moins une équerre de positionnement 43 fixé sous la platine et reposant contre une partie sensiblement verticale de la structure portante 41. Au moins un moyen de réglage, par exemple un excentrique de réglage 44 peut être fixé sur l'équerre de positionnement 43 au point de contact avec la structure portante 41 afin de régler précisément l'horizontalité de la platine de support 42, plus particulièrement pour garantir que la platine de support 42, la platine de l'outil 33 et le boîtier du porte-outil 22 soit coplanaire lors des opérations d'accouplement ou de désaccouplement. Avec l'excentrique de réglage 44, il est aussi possible d'adapter le positionnement de la platine de support 42 aux déformations induites par le poids de chaque outil. A titre d'alternative (non représentée), l'excentrique de réglage peut être remplacé par une vis de réglage fixée dans l'équerre et poussant sur la structure portante 41. La platine de support 42 peut avoir une forme générale en U. Elle comporte un cône de positionnement 48 du support, par exemple aux extrémités de chaque branche du U. Ces caractéristiques permettent de supporter l'outil 30, en particulier la platine de l'outil 33 d'une manière bien définie dans l'espace afin de faciliter les opérations d'accouplement et de désaccouplement du porte-outil 20 avec l'outil 30.

Un trièdre de positionnement 45 du porte-outil 20 relativement à l'outil 30 peut également être fixé sur la platine de support 42. Il peut être fixé au plus près de la structure portante 41 afin de ne pas gêner les opérations du porte-outil 20. Le trièdre de positionnement 45 comporte une première partie verticale pour le positionnement longitudinal 45X, une seconde partie verticale pour le positionnement transversal 45Y et une partie horizontale pour le positionnement en hauteur 45Z. Le trièdre de positionnement 45 constitue une référence spatiale et coopère avec les capteurs de positionnement 27X, 27Y, 27Z pour l'approche du porte-outil 20.

### Verrouillage/déverrouillage sur support:

La Figure [Fig.12] illustre schématiquement en perspective un porte-outil 20 en phase d'approche d'un support d'outil 40 sur lequel repose un outil 30 lors du fonctionnement du système de portique robotisé 11. Il sera également fait référence aux Figures [Fig.7] et [Fig.9] qui montrent le couplage du porte-outil 20 avec le support d'outil 20.

Lors de cette phase d'approche, le porte-outil 20 est déplacé conjointement avec le premier chariot 11, le second chariot 12 et la colonne 15 en direction du support d'outil 40 se trouvant dans la zone de stockage des outils 6. Le coulisseau de verrouillage 26 est dans une configuration déverrouillée (voir la Figure [Fig.7]). La position approximative de chaque outil est mémorisée dans la mémoire 52 du système informatique 50. Le logiciel 53 de gestion de l'activité maraîchère, de planification et du suivi quotidien de l'activité de l'exploitation détermine quel outil doit être utilisé pour exécuter une action particulière. A titre d'alternative, le choix de l'outil peut se faire de manière manuelle sans passer nécessairement par une commande générée par le logiciel. L'approche fine est réalisée au moyen de la coopération entre les capteurs de positionnement 27X, 27Y, 27Z et le trièdre de positionnement 45 du porte-outil 20. Tout d'abord, le porte-outil 20 peut être avancé selon la direction de l'axe longitudinal X jusqu'à ce que le premier capteur de position du porte-outil selon la direction longitudinale 27X entre en contact avec la première partie verticale 45X du trièdre de positionnement 45. Ensuite, le porte-outil 20 peut être déplacé selon la direction de l'axe transversal Y jusqu'à ce que le deuxième capteur de position du porte-outil selon la direction transversale 27Y entre en contact avec la seconde partie verticale 45Y du trièdre de positionnement 45. Enfin, le porte-outil 20 peut être descendu selon la direction de l'axe vertical Z jusqu'à ce que le troisième capteur de position du porte-outil selon la direction verticale 27Z entre en contact avec la partie horizontale 45Z du trièdre de positionnement 45. Cette phase d'approche est identique qu'un outil soit déposé à la fin d'une action maraîchère, qu'un outil soit changé entre deux actions maraîchères différentes, ou qu'un outil soit recherché si le porte-outil se trouve à vide.

Lorsque le porte-outil se retrouve à vide et qu'un nouvel outil doit être couplé au porte-outil, après cette phase d'approche, une phase de couplage débute. Lors de la descente du porte outil, à la fin de la phase d'approche, l'interface de verrouillage 35 de l'outil 30 s'insère dans le logement de boitier 23. Etant donné que le coulisseau de verrouillage 26 est dans une configuration déverrouillée, d'une part, la partie centrale 26A s'insère dans l'alésage 39 de la première paroi 38A, d'autre part, la partie latérale 26C s'insère dans la rainure 38C, et, enfin, une partie de la vis sans fin 28B s'insère dans l'alésage 39 de la seconde paroi 38B (voir la Figure [Fig.7]). Ensuite, le moteur du sélecteur 28A est commandé et entraîne la translation du coulisseau de verrouillage 26 dans l'interface de verrouillage 35 pour positionner le coulisseau de verrouillage 26 dans une configuration verrouillée (flèche VR). Plus précisément, la partie latérale du coulisseau 26B s'insère dans l'alésage 39 de la première paroi 38A, l'autre partie latérale du coulisseau 26C s'insère dans l'alésage 39 de la seconde paroi 38B, la partie centrale 26A se trouve alors dans la rainure 38C (voir la Figure [Fig.9]). En outre, la partie latérale 26B reste partiellement reçue dans l'alésage du logement de corps 24A et l'autre partie latérale 26C s'insère partiellement dans l'autre alésage 24B. L'interface de verrouillage 35 se trouve alors verrouillée dans le logement de corps 23 par l'intermédiaire du coulisseau de verrouillage 26 qui le traverse de part en part.

Le porte-outil 20 avec l'outil 30 verrouillé peut ensuite être retiré du support d'outil 40 par une montée selon l'axe vertical Z, puis un déplacement selon l'axe longitudinal X. Une fois cet ensemble sorti de la zone de stockage des outils 6, le portique robotisé 11 est déplacé dans la zone de culture 7 pour y effectuer l'action prévue.

Lorsqu'un outil 30 est couplé au porte-outil 30 et que cet outil doit être découplé du porte-outil, après la phase d'approche décrite plus haut, une phase de découplage débute. Le moteur du sélecteur 28A est commandé et entraîne la translation du coulisseau de verrouillage 26 dans l'interface de verrouillage 35 pour positionner le coulisseau de verrouillage 26 dans une configuration déverrouillée (flèche DV). Plus précisément, lors de cette translation, la partie centrale du coulisseau 26A s'insère dans l'alésage 39 de la première paroi 38A, la partie latérale du coulisseau 26B s'extrait de l'alésage 39 de la première paroi 38A et pénètre plus avant dans l'alésage du logement de corps 24A, l'autre partie latérale du coulisseau 26C s'extrait de l'alésage 24B et de l'alésage 39 de la seconde paroi 38B et s'insère dans la rainure 38C (voir la Figure [Fig.7]). L'interface de verrouillage 35 se trouve alors libre de déplacement selon la direction verticale Z dans le logement de corps 23 n'étant plus verrouillée par le coulisseau de verrouillage 26. Lors de la montée du porte outil, l'interface de verrouillage 35 de l'outil 30 peut alors librement sortir du logement de boîtier 23.

Le porte-outil 20 n'étant plus verrouillé avec l'outil 30, le porte-outil 20 peut ensuite être retiré et éloigné du support d'outil 40 sur lequel reste posé l'outil 30 par une montée selon l'axe vertical Z. Une fois cette opération terminée, l'ensemble sans outil peut être soit dirigé par des translations appropriées selon l'axe longitudinal X et l'axe transversal Y vers un autre outil stocké sur une autre platine de la structure portante ou être déplacé à vide hors de la zone de stockage des outils 6.

Les dessins et leur description ci-dessus illustrent plutôt qu'ils ne limitent l'invention. Il convient de noter que, même si le mode de réalisation de la présente invention a été illustré pour un usage dans une serre comprenant plusieurs chapelles, il est aussi adapté à un usage dans une serre à chapelle unique voire dans plusieurs serres. Il peut aussi être utilisé pour un usage hors d'une serre dans la mesure où la zone à cultiver serait munie de poteaux supportant des rails permettant au portique robotisé de se déplacer. En outre, le sélecteur de configuration du coulisseau réalisé au moyen d'un moteur de sélecteur et d'une vis sans fin n'est pas limitatif car d'autres moyens de déplacement du coulisseau sont envisageables, par exemple une translation du coulisseau pourrait être obtenue par des moyens magnétiques ou pneumatiques. De plus, le connecteur électrique et données qui a été décrit et représenté n'est pas limitatif, le porte-outil pouvant aussi comporter un connecteur de fluide (air, eau, produit de traitement, etc.). Également, le support d'outil tel que présenté et décrit n'est pas essentiel au fonctionnement du verrouillage/déverrouillage d'un outil au porte-outil dont l'interface de verrouillage peut aussi fonctionner de manière indépendante, le support d'outil n'étant qu'un moyen pour positionner de manière définie les outils en attente d'usage. Il est possible de remplacer le support décrit par un simple support garantissant une certaine horizontalité de la platine de l'outil et des moyens de communication entre le porte-outil et l'outil pour déterminer sa position exacte dans la serre. Également encore, en ce qui concerne le positionnement relatif du porte-outil avec le support d'outil, l'exemple des capteurs réalisés sous la forme de capteurs mécaniques de position linéaire coopérant avec un trièdre de positionnement n'est pas limitatif, car d'autres moyens de positionnement sont possibles comme par exemple des capteurs optiques (par exemple au moins une caméra) apte à déterminer la position du porte-outil en coopérant avec une cible de positionnement disposée sur le support d'outil ou l'outil lui-même. En outre, l'identification de l'élément fonctionnel de l'outil par la coopération du capteur d'identification de type RFID avec la radio-étiquette RFID de l'outil n'est qu'un exemple, tout autre moyen d'identification est envisageable comme par exemple une caméra coopérant avec code type code barre ou QR code (de l'anglais « quick response code » pour code à réponse rapide). Enfin, l'interface de verrouillage réalisée sous la forme d'une pièce sensiblement parallélépipédique rainurée et percée n'est pas limitatif puisqu'elle pourrait également sous la forme d'un cylindre ou d'un prisme ou de tout autre polyèdre dans la mesure où le logement de corps ait une forme adaptée.

### Liste des références:

1 Serre
RM Surface de culture
1A, 1B, 1C, 1D Chapelle
2 Sol
3 Arche
4A, 4B Rail de guidage selon l'axe longitudinal X
5 Butée
6 Zone de stockage des outils
7 Zone de culture
8 Capteurs
10 Portique robotisé
11 Premier Chariot (direction X)
12 Second Chariot (direction Y+Z)
X Axe longitudinal X
Y Axe transversal Y
Z Axe vertical Z
13A, 13B Ensemble motorisé
14A, 14B Armoire électrique
15 Colonne/Bras
20 Porte-outil
21A Platine de couplage
21B Ensemble de couronne motorisée
22 Corps de porte-outil
23 Logement de corps
24A, 24B Alésage du logement corps
25 Trou de positionnement muni d'une fraisure
26 Coulisseau de verrouillage
26A partie centrale du coulisseau de verrouillage
26B, 26C parties latérales du coulisseau de verrouillage
27X, 27Y, 27Z Capteur de positionnement du porte-outil / Doigt de capteur / Ressort de rappel
28 Sélecteur de configuration du coulisseau
28A Moteur du sélecteur
28B Vis sans fin
61 Capteur d'identification
62 Connecteur électrique et données
30 Outil
31 Elément fonctionnel de l'outil
32 Profilé de liaison de l'élément fonctionnel de l'outil à la platine de l'outil
33 Platine de l'outil
34 Trou de positionnement de l'outil
35 Interface de verrouillage
36 Embase
37 Semelle
38A, 38B, 38C Première et seconde parois, rainure
39 Alésage de l'interface de verrouillage
63 Etiquette d'identification de l'outil
64 Connecteur électrique et données de l'outil
40 Support d'outil
41 Structure portante
42 Platine de support
43 Equerre de positionnement de la platine
44 Moyen de réglage (excentrique de réglage)
45 Trièdre de positionnement du porte-outil relativement à l'outil
45X Partie verticale pour le positionnement longitudinal
45Y Partie verticale pour le positionnement transversal
45Z Partie horizontale pour le positionnement en hauteur
46 Profilé de positionnement latéral du support d'outil sur la structure
47 Poteaux de maintien
48 Cône de positionnement du support
50 Système informatique
51 Ordinateur
52 Mémoire
53 Logiciel
54 Smartphone/Tablette

## Revendications

1. Un système de portique robotisé agricole (10) comprenant au moins un chariot (12) motorisé muni d'un porte-outil (20) pour mettre en œuvre un outil (30) relativement à une surface de culture (RM), le porte-outil (20) comportant une platine de couplage (21A) au chariot (12) et un corps de porte-outil (22), l'outil (30) comportant une platine de l'outil (33) lié à un élément fonctionnel de l'outil (31) ;
le système de portique robotisé agricole (10) est **caractérisé en ce que** le corps de porte-outil (22) et la platine de l'outil (33) sont agencés pour coupler de manière amovible l'outil (30) au porte-outil (20) et **en ce que**:
- le corps de porte-outil (22) comporte un logement de corps (23) formant une cavité débouchante vers la platine de l'outil (33), un coulisseau de verrouillage (26) positionné dans le logement de corps (23) et s'étendant dans celui-ci de sorte à être reçu de manière coulissante en translation par au moins un alésage du logement de corps (24A, 24B), le coulisseau de verrouillage (26) comportant une partie centrale (26A) et au moins une partie latérale (26B, 26C), ladite partie centrale (26A) étant dimensionnée selon une première section de dimension inférieure à une seconde section de ladite partie latérale (26B, 26C), et un sélecteur de configuration du coulisseau (28) apte à translater le coulisseau de verrouillage (26) dans le logement de corps (23) et dans le, au moins un, alésage (24A, 24B) ;
- la platine de l'outil (33) comporte une interface de verrouillage (35) munie d'une rainure (38C) définissant au moins une paroi (38A, 38B) s'étendant perpendiculairement à ladite platine de l'outil (33) et d'un alésage de l'interface de verrouillage (39) positionné et dimensionné de sorte qu'une ouverture ménagée en partie supérieure de ladite paroi (38A, 38B) permet uniquement un passage de la partie centrale (26A) et une ouverture ménagée en partie centrale de ladite paroi (38A, 38B) permet une translation de la partie latérale (26B, 26C) pour former une glissière linéaire ouverte pour ledit coulisseau (26) ;
- ladite interface de verrouillage (35) coopérant avec ledit coulisseau de verrouillage (26) sous l'action dudit sélecteur de configuration du coulisseau (28) entre une configuration déverrouillée et une configuration verrouillée de l'outil (30) avec le porte-outil (20).

2. Le système selon la revendication 1, dans lequel le logement de corps (23) comporte deux alésages (24A, 24B) en vis-à-vis, le coulisseau de verrouillage (26) comporte une partie centrale (26A) et deux parties latérales (26B, 26C), l'interface de verrouillage (35) comporte deux parois (38A, 38B) s'étendant perpendiculairement à ladite platine de l'outil (33) chacune traversée par l'alésage de l'interface de verrouillage (39), le coulisseau de verrouillage (26) étant reçu de manière coulissante en translation dans les deux alésages du logement de corps (24A, 24B) et dans l'alésage de l'interface de verrouillage (39).

3. Le système selon l'une quelconque des revendications 1 à 2, dans lequel le sélecteur de configuration du coulisseau (28) est réalisé au moyen d'un moteur de sélecteur (28A) et d'une vis sans fin (28B).

4. Le système selon l'une quelconque des revendications 1 à 3, dans lequel le corps de porte-outil (22) comporte plusieurs trous de positionnement (25) du porte-outil (20) vis-à-vis de l'outil (30).

5. Le système selon l'une quelconque des revendications 1 à 4, dans lequel le porte-outil (20) comporte un capteur d'identification (61) et l'outil (30) comporte une étiquette d'identification (63).

6. Le système selon l'une quelconque des revendications 1 à 5, dans lequel le porte-outil (20) comporte un connecteur électrique et données (62) pour alimenter et/ou échanger des données ou des commandes entre le porte-outil (20) et l'outil (30).

7. Le système selon l'une quelconque des revendications 1 à 6, comportant en outre un support d'outil (40) comportant au moins une platine de support (42) pour supporter l'outil (30) fixée à une structure portante (41) et reposant contre une partie sensiblement verticale de la structure portante (41) au moyen d'au moins une équerre de positionnement (43) et d'au moins un moyen de réglage (44) pour régler l'horizontalité de la platine de support (42).

8. Le système selon la revendication précédente, dans lequel le moyen de réglage (44) pour régler l'horizontalité de la platine de support (42) comporte un excentrique de réglage ou une vis de réglage.

9. Le système selon l'une quelconque des revendications 7 à 8, dans lequel le porte-outil (20) comprend un moyen de positionnement du porte-outil réalisé sous la forme d'un ensemble de capteur de positionnement du porte-outil comportant un premier capteur de position du porte-outil selon la direction longitudinale (27X), un deuxième capteur de position du porte-outil selon la direction transversale (27Y), et un troisième capteur de position du porte-outil selon la direction verticale (27Z), chaque capteur étant réalisé sous la forme d'un capteur mécanique de position linéaire la platine de support (42).

10. Le système selon la revendication précédente, dans lequel le support d'outil (40) comporte un trièdre de positionnement (45) du porte-outil (20) relativement à l'outil (30) sur le support d'outil (40), ledit trièdre de positionnement (45) comportant une première partie verticale pour un positionnement longitudinal (45X), une seconde partie verticale pour un positionnement transversal (45Y) et une partie horizontale pour un positionnement en hauteur (45Z) coopérant respectivement avec lesdits premier, deuxième et troisième capteurs de position du porte-outil (27X, 27Y, 27Z).

11. Le système selon l'une quelconque des revendications 7 à 8, dans lequel le porte-outil (20) comprend un moyen de positionnement du porte-outil réalisé sous la forme d'au moins un capteur optique de positionnement du porte-outil, et dans lequel le support d'outil (40) comporte au moins une cible de positionnement.

12. Le système selon l'une quelconque des revendications 7 à 11, dans lequel la platine de l'outil (33) comporte au moins un trou de positionnement de l'outil (34), chaque trou de positionnement de l'outil (34) coopérant avec un cône de positionnement du support (48) pour positionner l'outil (30) sur le support d'outil (40).

## Patentansprüche

1. Landwirtschaftliches robotisches Portalsystem (10), das mindestens einen motorisierten Wagen (12) umfasst, der mit einem Werkzeughalter (20) versehen ist, um ein Werkzeug (30) in Bezug auf eine Anbaufläche (RM) bereitzustellen, wobei der Werkzeughalter (20) eine Kopplungsplatte (21A) an dem Wagen (12) und einen Werkzeughalterkörper (22) aufweist, wobei das Werkzeug (30) eine Werkzeugplatte (33) aufweist, die mit einem funktionalen Element des Werkzeugs (31) verbunden ist; wobei das landwirtschaftliche robotische Portalsystem (10) **dadurch gekennzeichnet ist, dass** der Werkzeughalterkörper (22) und die Werkzeugplatte (33) eingerichtet sind, um das Werkzeug (30) mit dem Werkzeughalter (20) lösbar zu koppeln und dadurch, dass:
- der Werkzeughalterkörper (22) eine Körperaufnahme (23), die einen zu der Werkzeugplatte (33) ausmündenden Hohlraum bildet, einen Verriegelungsschieber (26), der in der Körperaufnahme (23) positioniert ist und sich so darin erstreckt, dass er von mindestens einer Bohrung der Körperaufnahme (24A, 24B) translatorisch gleitend aufgenommen werden kann, wobei der Verriegelungsschieber (26) einen Mittelteil (26A) und mindestens einen Seitenteil (26B, 26C) aufweist, wobei der Mittelteil (26A) einen ersten Abschnitt hat, der kleiner ist als ein zweiter Abschnitt des Seitenteils (26B, 26C), und einen Konfigurationswähler des Schiebers (28), der geeignet ist, den Verriegelungsschieber (26) in der Körperaufnahme (23) und in der mindestens einen Bohrung (24A, 24B) zu verschieben;
- die Werkzeugplatte (33) eine Verriegelungsschnittstelle (35) aufweist, die mit einer Nut (38C) versehen ist, die mindestens eine Wand (38A, 38B) definiert, die sich senkrecht zu der Werkzeugplatte (33) erstreckt, und einer Verriegelungsschnittstellenbohrung (39), die so positioniert und bemessen ist, dass eine Öffnung in dem oberen Teil der Wand (38A, 38B) lediglich einen Durchgang des Mittelteils (26A) ermöglicht und eine Öffnung in dem Mittelteil der Wand (38A, 38B) eine Verschiebung des Seitenteils (26B, 26C) ermöglicht, um eine offene lineare Gleitschiene für den Wagen (26) zu bilden;
- wobei die Verriegelungsschnittstelle (35) mit dem Verriegelungsschieber (26) unter der Wirkung des Konfigurationswählers des Schiebers (28) zwischen einer entriegelten Konfiguration und einer verriegelten Konfiguration des Werkzeugs (30) mit dem Werkzeughalter (20) zusammenwirkt.

2. System nach Anspruch 1, wobei die Körperaufnahme (23) zwei gegenüberliegende Bohrungen (24A, 24B) aufweist, der Verriegelungsschieber (26) einen Mittelteil (26A) und zwei Seitenteile (26B, 26C) aufweist, die Verriegelungsschnittstelle (35) zwei sich senkrecht zu der Werkzeugplatte (33) erstreckende Wände (38A, 38B) aufweist, die jeweils von der Verriegelungsschnittstellenbohrung (39) durchquert werden, wobei der Verriegelungsschieber (26) in den beiden Bohrungen der Körperaufnahme (24A, 24B) und in der Verriegelungsschnittstellenbohrung (39) translatorisch gleitend aufgenommen wird.

3. System nach einem der Ansprüche 1 bis 2, wobei der Konfigurationswähler des Schiebers (28) mittels eines Gangwahlmotors (28A) und einer Schnecke (28B) ausgeführt ist.

4. System nach einem der Ansprüche 1 bis 3, wobei der Werkzeughalterkörper (22) mehrere Positionierungslöcher (25) des Werkzeughalters (20) gegenüber dem Werkzeug (30) aufweist.

5. System nach einem der Ansprüche 1 bis 4, wobei der Werkzeughalter (20) einen Identifikationssensor (61) aufweist und das Werkzeug (30) ein Identifikationsetikett (63) aufweist.

6. System nach einem der Ansprüche 1 bis 5, wobei der Werkzeughalter (20) einen elektrischen und Datenanschluss (62) zur Versorgung und/oder zum Austausch von Daten oder Befehlen zwischen dem Werkzeughalter (20) und dem Werkzeug (30) aufweist.

7. System nach einem der Ansprüche 1 bis 6, das ferner einen Werkzeugträger (40) aufweist, der mindestens eine Trägerplatte (42) zum Tragen des Werkzeugs (30) aufweist, die an einer Tragstruktur (41) befestigt ist und mittels mindestens eines Positionierungswinkels (43) und mindestens eines Einstellmittels (44) zum Einstellen der Horizontalität der Trägerplatte (42) an einem im Wesentlichen vertikalen Teil der Tragstruktur (41) anliegt.

8. System nach vorhergehendem Anspruch, wobei das Einstellmittel (44) zum Einstellen der Horizontalität der Trägerplatte (42) einen Einstellexzenter oder eine Einstellschraube aufweist.

9. System nach einem der Ansprüche 7 bis 8, wobei der Werkzeughalter (20) ein Werkzeughalterpositionierungsmittel umfasst, das in Form einer Werkzeughalterpositionierungs-Sensoranordnung ausgeführt ist, die einen ersten Positionssensor des Werkzeughalters gemäß der Längsrichtung (27X), einen zweiten Positionssensor des Werkzeughalters gemäß der Querrichtung (27Y) und einen dritten Positionssensor des Werkzeughalters gemäß der vertikalen Richtung (27Z) aufweist, wobei jeder Sensor in Form eines mechanischen linearen Positionssensors der Trägerplatte (42) ausgeführt ist.

10. System nach vorhergehendem Anspruch, wobei der Werkzeugträger (40) einen Positionierungstrieder (45) des Werkzeughalters (20) relativ zu dem Werkzeug (30) auf dem Werkzeugträger (40) aufweist, wobei der Positionierungstrieder (45) einen ersten vertikalen Teil für eine Längspositionierung (45X), einen zweiten vertikalen Teil für eine Querpositionierung (45Y) und einen horizontalen Teil für eine Höhenpositionierung (45Z) aufweist, die jeweils mit dem ersten, zweiten und dritten Positionssensor des Werkzeughalters (27X, 27Y, 27Z) zusammenwirken.

11. System nach einem der Ansprüche 7 bis 8, wobei der Werkzeughalter (20) ein Positionierungsmittel des Werkzeughalters umfasst, das in Form von mindestens einem optischen Positionierungssensor des Werkzeughalters ausgeführt ist, und wobei der Werkzeugträger (40) mindestens ein Positionierungsziel aufweist.

12. System nach einem der Ansprüche 7 bis 11, wobei die Werkzeugplatte (33) mindestens ein Werkzeugpositionierungsloch (34) aufweist, wobei jedes Werkzeugpositionierungsloch (34) mit einem Positionierungskegel des Trägers (48) zusammenwirkt, um das Werkzeug (30) auf dem Werkzeugträger (40) zu positionieren.

## Claims

1. An agricultural robotic gantry system (10) comprising at least one motorized carriage (12) provided with a tool carrier (20) for implementing a tool (30) relative to a cultivation surface (RM), the tool carrier (20) comprising a coupling plate (21A) for coupling to the carriage (12) and a tool carrier body (22), the tool (30) comprising a tool plate (33) linked to a functional element of the tool (31) ;
the agricultural robotic gantry system is **characterized in that** the tool carrier body (22) and the tool plate (33) are arranged to removably couple the tool (30) to the tool carrier (31) and **in that**:
- the tool carrier body (22) comprises a body housing (23) forming a cavity opening towards the tool plate (33), a locking crosshead (26) positioned in the body housing (23) and extending therein so as to be received in a sliding manner in translation by at least one bore of the body housing (24A, 24B), the locking crosshead (26) comprising a central part (26A) and at least one lateral part (26B, 26C), said central part (26A) being dimensioned according to a first section of dimension smaller than a second section of said lateral part (26B, 26C), and a slide configuration selector (28) capable of translating the locking crosshead (26) in the body housing (23) and in the, at least one, bore of the body housing (24A, 24B) ;
- the tool plate (33) comprises a locking interface (35) provided with a groove (38C) defining at least one wall (38A, 38B) extending perpendicular to said tool plate (33) and a bore of the locking interface (39) positioned and dimensioned so that an opening made in the upper part of said wall (38A, 38B) only allows a passage of the central part (26A) and an opening made in the central part of said wall (38A, 38B) allows a translation of the lateral part (26B, 26C) to form an open linear slide for said locking crosshead (26) ;
- said locking interface (35) cooperating with said locking crosshead (26) under the action of said slide configuration selector (28) between an unlocked configuration and a locked configuration of the tool (30) with the tool carrier (20).

2. The system of claim 1, wherein the body housing (23) comprises two facing bores (24A, 24B), the locking crosshead (26) comprising a central part (26A) and two lateral parts (26B, 26C), the locking interface (35) comprising two walls (38A, 38B) extending perpendicular to said plate of the tool (33) each crossed by the bore of the locking interface (39), the locking crosshead (26) being slidably received in translation in both bores of the body housing (24A, 24B) and in the bore of the locking interface (39).

3. The system according to anyone of claims 1 to 2, wherein the slide configuration selector (28) is made by means of a selector motor (28A) and an endless screw (28B).

4. The system according to anyone of claims 1 to 3, wherein the tool carrier body (22) includes several positioning holes (25) for positioning the tool carrier (20) with respect to the tool (30).

5. The system according to anyone of claims 1 to 4, wherein the tool carrier (20) includes an identification sensor (61) and the tool (30) includes an identification tag (63).

6. The system according to anyone of claims 1 to 5, wherein the tool carrier (20) comprises an electrical and data connector (62) for powering and/or exchanging data or commands between the tool carrier (20) and the tool (30).

7. The system according to anyone of claims 1 to 6, further comprising a tool support (40) comprising at least one support plate (42) for supporting the tool (30) fixed to a supporting structure (41) and resting against a substantially vertical part of the supporting structure (41) by means of at least one positioning bracket (43) and at least one adjustment means (44) for adjusting the horizontality of the support plate (42).

8. The system according to the preceding claim, wherein the adjustment means (44) for adjusting the horizontality of the support plate (42) comprises an adjustment eccentric or an adjustment screw.

9. The system according to anyone of claims 7 to 8, wherein the tool carrier (20) comprises a set of tool carrier positioning sensors (27X, 27Y, 27Z) made in the form of a tool carrier positioning sensor assembly comprising a first tool carrier positioning sensor in the longitudinal direction (27X), a second positioning sensor of the tool carrier in the transverse direction (27Y) and a third positioning sensor of the tool carrier in the vertical direction (27Z), each sensor being made in the form of a mechanical linear position sensor of the support plate (42).

10. The system according to the preceding claim, wherein the tool support (40) comprises a positioning trihedron (45) for positioning the tool carrier (20) relative to the tool (30) on the tool support (40), said positioning trihedron (45) comprising a first vertical part for longitudinal positioning (45X), a second vertical part for transverse positioning (45Y) and a horizontal part for height positioning (45Z) cooperating respectively with said first, second and third positioning sensors of the tool carrier (27X, 27Y, 27Z).

11. The system according to anyone of claims 7 to 8, wherein the tool carrier (20) comprises a means for positioning the tool carrier made in the form of at least one optical sensor for positioning the tool carrier, the tool support (40) comprising at least one positioning target.

12. The system according to anyone of claims 7 to 11, wherein the tool plate (33) comprises at least one tool positioning hole (34), each tool positioning hole (34) cooperating with a support positioning cone (48) to position the tool (30) on the tool support (40).
